Europäisches Patentamt

European Patent Office

Office européen des brevets

(11) Numéro de publication: **0 233 547**
**A1**

## (12) DEMANDE DE BREVET EUROPEEN

(21) Numéro de dépôt: **87101499.9**

(22) Date de dépôt: **04.02.87**

(51) Int. Cl.³: **B 60 C 17/04**
**B 60 B 21/12**

(30) Priorité: **12.02.86 FR 8601995**

(43) Date de publication de la demande:
**26.08.87 Bulletin 87/35**

(84) Etats contractants désignés:
**AT BE CH DE ES FR GB GR IT LI LU NL SE**

(71) Demandeur: **MICHELIN & CIE (Compagnie Générale des Etablissements Michelin) Société dite:**
**4 rue du Terrail**
**F-63000 Clermont-Ferrand(FR)**

(72) Inventeur: **Susini, Pierre**
**45, rue Châteaubriand**
**F-63100 Clermont-Ferrand(FR)**

(74) Mandataire: **Renaudie, Jacques et al,**
**Michelin & Cie Service K. Brevets**
**F-63040 Clermont-Ferrand Cédex(FR)**

(54) **Dispositif de sécurité pour roulage de secours.**

(57) Le dispositif de sécurité 3 comporte essentiellement un anneau rigide 4 et une pièce annulaire 5 en matériau élastique souple. L'anneau rigide 4 comporte plusieurs secteurs 41. La liaison entre ces secteurs 41 est réalisée par charnières, dont on aperçoit un axe 402. La face supérieure de l'anneau rigide 4 sert d'appui radial pour la bande de roulement d'un pneumatique en cas de roulage de secours.

FIG.1

Croydon Printing Company Ltd.

EP 0 233 547 A1

La présente invention concerne les sytèmes grâce auxquels on procure aux pneumatiques la capacité de continuer à rouler et à porter la charge lorsqu'ils subissent une avarie. Plus particulièrement, elle se rapporte aux appuis rigides disposés à l'intérieur du pneumatique, inactifs en fonctionnement normal, et empêchant un affaissement complet du pneumatique en cas de crevaison.

On connait déjà de nombreux dispositifs de ce genre, comme par exemple celui décrit dans le brevet FR 1 560 299. Un appui de ce genre est habituellement composé de plusieurs secteurs qui doivent être assemblés à l'intérieur du pneumatique et liés entre eux le plus souvent par des boulons et des écrous. Les dispositifs connus, s'ils confèrent aux pneumatiques des performances correctes en roulage de recours, posent cependant des problèmes de montage et de démontage qui sont à ce jour mal résolus.

Le temps requis pour l'assemblage, les outils nécessaires (parfois même de l'outillage spécifique), rendent l'opération longue et fastidieuse. On utilise d'ailleurs souvent des jantes spécialement adaptées ou des jantes à rebord latéral démontable et ce, même pour des équipements de voiture de tourisme. La hauteur radiale de l'appui est en général telle qu'il ne peut être introduit dans le pneumatique, entre les bourrelets, qu'en morceaux séparés appelés secteurs. Cela impose donc que ces secteurs soient assemblés entre eux dans le pneu, donc dans une position qui rend les manipulations difficiles.

Il a déjà été proposé de simplifier la liaison entre secteurs. Le brevet US 4 346 747 utilise une liaison par charnières. Cependant, un tel dispositif ne comporte aucun effet de serrage des secteurs entre eux dans le sens circonférentiel. Or, toute fabrication industrielle implique nécessairement des tolérances sur les cotes et sur les formes, même si ces tolérances peuvent être très étroites au prix d'un coût de fabrication élevé. En conséquence, un tel dispositif présente nécessairement des jeux entre les

...

0233547

pièces constitutives, et donc provoque des chocs et des
vibrations en usage.

L'objectif de la présente invention est de proposer un
dispositif de sécurité du genre décrit, qui puisse être
monté très simplement à l'intérieur du pneumatique, sans
aucun outillage, sans préjudice pour le fonctionnement
normal de l'ensemble tournant et sans altérer la capacité de
procurer un roulage de fortune en cas de crevaison.

Le dispositif de sécurité selon l'invention, destiné à être
monté dans un ensemble comprenant un pneumatique et une
jante dont un bord latéral est démontable, ledit dispositif
comprenant essentiellement un anneau rigide constitué par
plusieurs secteurs dont la surface radialement extérieure
définit un appui radial pour la bande de roulement du
pneumatique lorsque celui-ci est dégonflé, ledit anneau
rigide étant monté sur et autour d'au moins une pièce
annulaire en matériau élastique souple, elle-même disposée
sur la jante en position de montage, est remarquable en ce
que les moyens de liaison entre lesdits secteurs forment
une charnière à axe parallèle à l'axe de la jante.

Les exemples de réalisation décrits dans la suite illustrent
l'invention et permettent de mieux la comprendre.

La figure 1 est une coupe radiale d'un dispositif de
sécurité monté sur une jante, à l'intérieur d'un
pneumatique.
Les figures 2 et 3 montrent en détail un mode de réalisation
des moyens de liaison entre secteurs.
La figure 4 est une vue en élévation des secteurs en
position de montage.
La figure 5 est une coupe au niveau de la liaison entre
secteurs selon une variante de réalisation de ladite
liaison.
La figure 6 est une coupe transversale au niveau d'un
secteur, montrant une variante de réalisation comportant
deux pièces annulaires en matériau élastique souple.

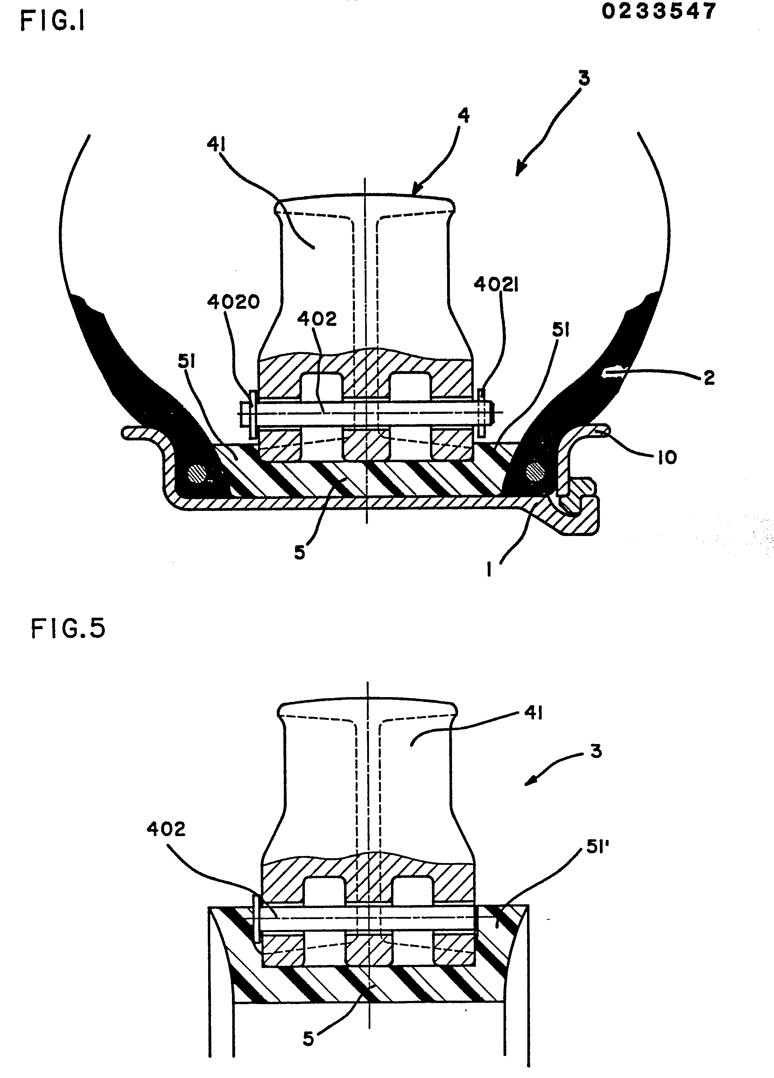

A la figure 1, on voit un ensemble comprenant une jante 1
sur laquelle on a monté un pneumatique 2 pourvu d'un

...

**0233547**

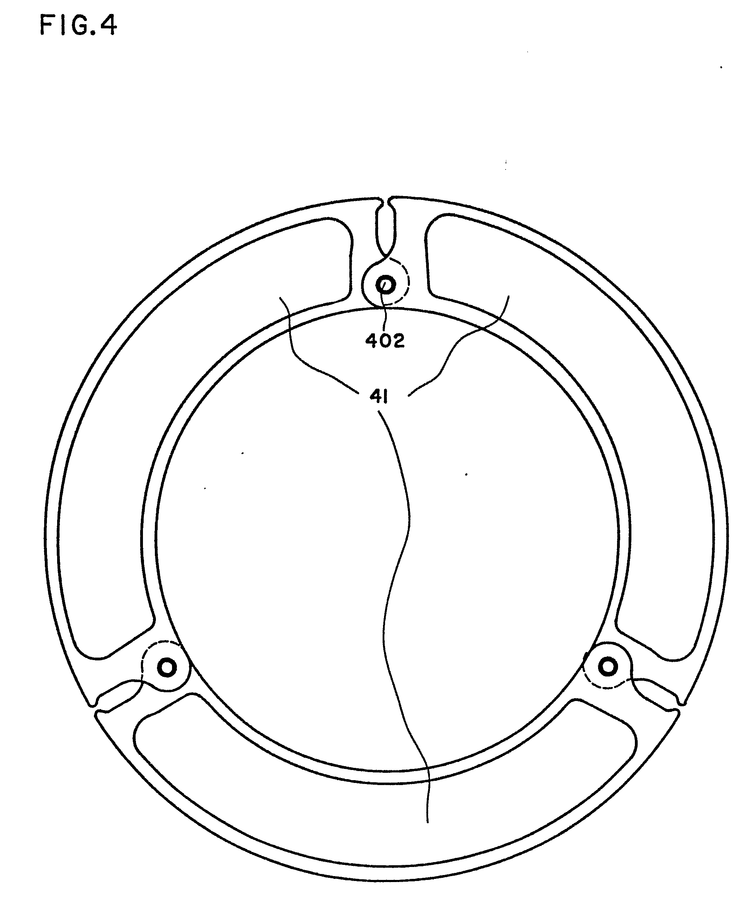

dispositif de sécurité 3. La jante 1 comporte un bord latéral démontable 10. Le dispositif de sécurité 3 selon l'invention comprend essentiellement un anneau rigide 4 et une pièce annulaire 5 en matériau élastique souple. L'anneau rigide 4 est constitué dans cet exemple par trois secteurs 41 que l'on voit mieux sur la figure 4. La surface radialement extérieure de ces secteurs 41 constitue un appui dans le sens radial pour la bande de roulement du pneumatique 1, comme cela est bien connu en soi. Du côté radialement intérieur, l'anneau rigide appuie sur une pièce annulaire 5 réalisée ici en caoutchouc. Cette pièce annulaire 5 sert également de centrage axial dudit anneau rigide 4 par rapport à cette pièce annulaire 5 en caoutchouc et donc par rapport à la jante 1 puisque l'anneau rigide 4 est disposé entre deux nervures 51 réalisées sur et faisant partie intégrante de ladite pièce annulaire 5.

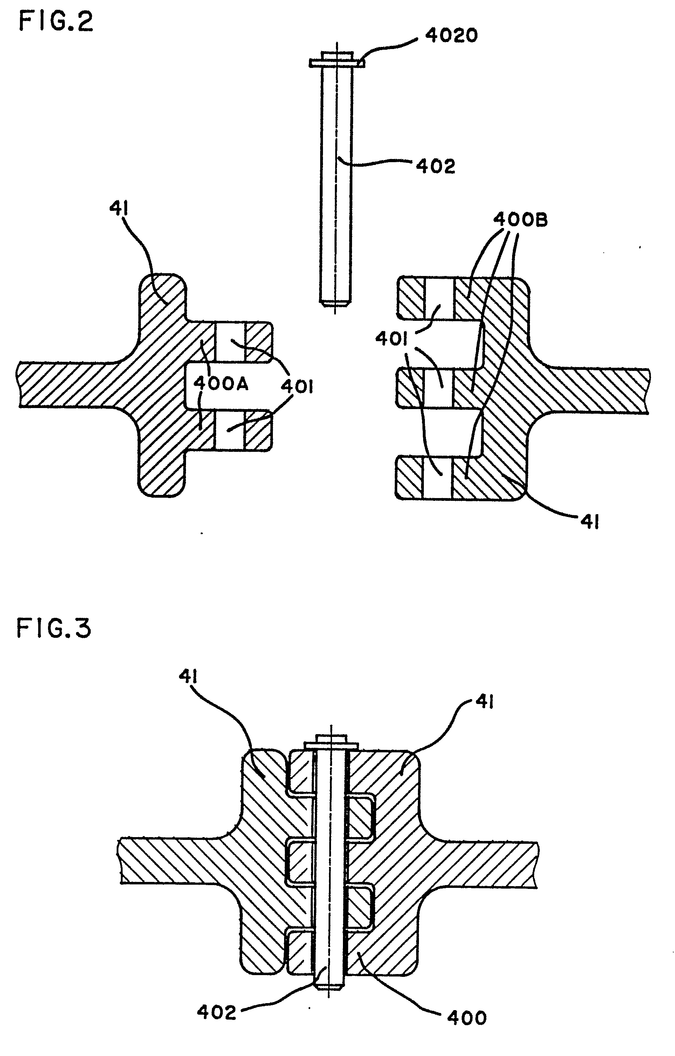

Aux figures 2 et 3, on voit en détail la constitution des charnières. Chaque extrémité (dans le sens circonférentiel) des secteurs 41 comporte des protubérances 400A (deux protubérances 400A dans l'exemple considéré) et 400B (trois protubérances dans l'exemple considéré) liées les unes 400A à un secteur 41 et les autres au secteur 41 adjacent. Lesdites protubérances 400A et 400B sont agencées de façon à ce qu'elles pénètrent les unes 400A dans les autres 400B. Chaque protubérance est percée d'un trou 401 permettant de glisser un axe de liaison 402 lorsque les secteurs 41 sont en position de montage (voir plus particulièrement les figures 3 et 4).

Les trois secteurs sont identiques. L'une de leurs extrémités dans le sens circonférentiel comporte donc deux protubérances, que l'on désignera par commodité de langage "demi-charnières de type A" et l'autre extrémité en comporte trois, que l'on désignera par "demi-charnière de type B". Ainsi, en les disposant judicieusement dans le pneumatique 2, on peut former un anneau rigide complet 4.
Le montage de l'ensemble se fait très facilement. Le pneumatique étant couché horizontalement sur un plan de travail, on introduit les trois secteurs 41 à l'intérieur en respectant leur orientation relative pour que les demi-charnières de type A et de type B soient ajacentes.

- 4 -    0233547

On aligne les trous 400 de manière à pouvoir enfiler les axes de liaison 402. Ceux-ci comportent un épaulement 4020 en saillie de sorte qu'ils restent en place sous l'effet de leur poids même si le diamètre des trous 401 est sensiblement plus grand que le diamètre des axes de liaison 402. Ainsi, le montage des secteurs ne nécessite strictement aucun outil. Les trois secteurs 41 forment maintenant un anneau (voir figure 4). On dispose ensuite la pièce annulaire 5 en caoutchouc à l'intérieur de l'anneau rigide 4 formé par les trois secteurs 41. Cela se fait très facilement grâce à la déformabilité de cette pièce. En variante de réalisation, cette pièce peut être fendue transversalement et peut donc être enroulée en spirale pour être introduite facilement à l'intérieur de l'anneau rigide 4 formé par les secteurs 41. Le pneumatique 2, à l'intérieur duquel se trouve le dispositif de sécurité 3 peut maintenant être monté sur une jante 1 à bord démontable. Le pneumatique 1 à l'intérieur duquel se trouve le dispositif de sécurité 3 est glissé sur la jante. A l'état libre de toute contrainte, la largeur L de la pièce annulaire 5 en caoutchouc est supérieure à l'espace normalement disponible entre les bourrelets du pneumatique 2 lorsqu'il est monté sur sa jante 1. En conséquence, on ne peut terminer le montage de la jante sans appuyer axialement sur le bord démontable 10. On appuie donc sur ce bord 10, ce qui provoque une compression axiale permanente de la pièce annulaire 5 et donc une tendance à l'expansion de celle-ci dans le sens radial (coefficient de Poisson proche de 0.5). Or, dans le sens radial, la pièce annulaire 5 occupe juste l'espace disponible entre la jante 1 et l'anneau rigide 4. La mise en place finale du bord de jante 1 provoque donc une pression radiale orientée vers l'extérieur, circonférentiellement uniforme sur l'anneau rigide 4.

Ceci permet un rattrapage des jeux dans les charnières. La cohésion de l'anneau rigide 4 est donc assurée par la sollicitation des axes de liaison 402 en cisaillement sous l'effet de la compression de la pièce annulaire 5 alors même qu'il peut y avoir un jeu important entre les axes de liaison 402 et les trous 401. La pièce annulaire en matériau élastique souple assure le rattrapage des jeux

...

existant dans les liaisons entre les secteurs 41. De manière avantageuse, la largeur L de ladite pièce annulaire 5 à l'état libre de toute contrainte est compris entre 101 % et 125 % de la largeur l de ladite pièce annulaire 5 enserrée par les bourrelets du pneumatique 2 monté sur sa jante 1.

Le choix de la largeur L par rapport à la largeur l est fonction notamment de la largeur de la face inférieure ou semelle de l'anneau rigide 4 par rapport à la largeur disponible entre les bourrelets : plus la largeur de la semelle est faible par rapport à la largeur l disponible entre les bourrelets en position de montage, plus la largeur L doit être grande par rapport à l pour maintenir une pression radiale suffisante sur l'anneau rigide. Le choix de la largeur L est encore conditionné notamment par les caractéristiques du matériau choisi pour ladite pièce annulaire, par la hauteur disponible entre la jante 1 et l'anneau rigide 4. Les dimensions de la pièce annulaire 5 peuvent être déterminées très facilement, compte tenu du fait que, lors de la mise en place finale du bord 10 de la jante, le foisonnement du matériau de ladite pièce annulaire 5 doit être suffisant pour assurer la solidité des liaisons par charnières.

Dans une autre variante de réalisation, on peut dimensionner la pièce annulaire 5 de manière telle que son épaisseur soit supérieure à l'espace disponible entre la jante 1 et l'anneau rigide 4 de sorte que la compression résultant du montage sur la jante provoque le rattrapage des jeux existant dans les liaisons entre secteurs 41.

Dans le but de maintenir les axes de liaison 402 pendant la phase de montage, on peut prévoir de les retenir en place par une goupille 4021 comme représenté à la figure 1, ou bien par une rondelle élastique fendue, l'extrémité de l'axe 402 opposée à l'épaulement 4020 étant bien sûr pourvue d'un évidemment ad hoc. Il s'agit cependant là d'un maintien lâche, dont le rôle est provisoire (pendant la phase de montage essentiellement) par opposition à la liaison qui pourrait être obtenue en utilisant une tige filetée et des écrous.

La figure 5 montre une variante de réalisation où l'une 51'
au moins des nervures s'étend radialement suffisamment pour
maintenir l'axe 402 axialement pendant la phase de montage.
En dehors de ceci, et de la façon expliquée ci-avant, la
pièce annulaire 5 tend, lorsque le dispositif de sécurité 3
est monté sur une jante, à écarter radialement les secteurs
41, donc à les séparer les uns des autres. Cette séparation
est empêchée par les axes de liaison 402 qui, sollicités en
cisaillement, assurent la solidité des liaisons entre
secteurs 41.

Lesdites faces 410 sont orientées suffisamment vers
l'extérieur et la section des pièces 61 est telle que, lors
de la mise en place finale du bord démontable 10 de la
jante, chacune des pièces 61 soit mise en compression axiale
et qu'il en résulte, comme expliqué ci-avant, une tendance à
l'expansion dans le sens radial. Ceci assure la cohésion de
l'anneau rigide 4 en garantissant un rattrapage des jeux
existant dans les liaisons entre secteurs 41.

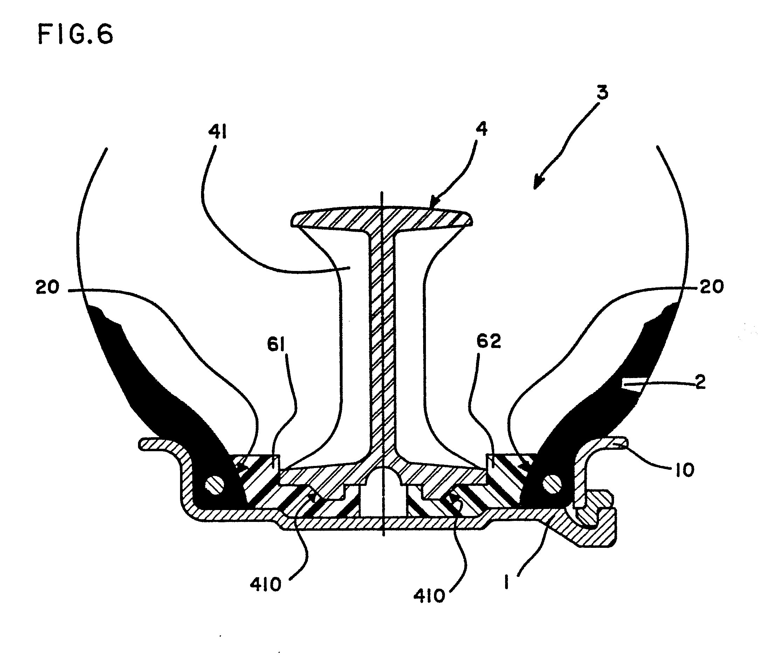

La description précédente se rapporte à une mise en oeuvre
de l'invention lorsque l'on utilise des jantes à fond plat.
Lorsque l'on utilise des jantes présentant une gorge
centrale peu profonde (dites "semi drop-center"), il peut
être avantageux de diviser axialement en deux parties la
pièce annulaire en matériau élastique souple.  On réalise
donc, transversalement (voir figure 6), deux pièces
annulaires 61 et 62 en matériau élastique souple, disposées
de part et d'autre de l'anneau rigide 4, chacune prenant
appui axialement vers l'intérieur sur une face 410 solidaire
de l'anneau rigide, et axialement vers l'extérieur contre le
bourrelet 20 du pneumatique, et étant dimensionnée de
manière telle que, en position de montage, lesdites pièces
annulaires soient en compression axialement.

Lesdites faces 410 sont orientées suffisamment vers
l'extérieur et la section des pièces 61 et 62 est telle que,
lors de la mise en place finale du bord démontable 10 de la
jante, chacune des pièces 61 et 62 soit mise en compression
axiale et qu'il en résulte, comme expliqué ci-avant, une
tendance à l'expansion dans le sens radial.  Ceci assure la
cohésion de l'anneau rigide 4 en garantissant un rattrapage

...

de jeux existant dans les liaisons entre secteurs 41.

Les moyens permettant le gonflage du pneumatique 2 lorsqu'il est muni d'un dispositif de sécurité 3 sont bien connus de l'homme de l'art. Ils ne font pas partie de la présente invention et n'ont pas été représentés.

## REVENDICATIONS

1. Dispositif de sécurité destiné à être monté dans un ensemble comprenant un pneumatique et une jante dont un bord latéral est démontable, ledit dispositif comprenant essentiellement un anneau rigide constitué par plusieurs secteurs dont la surface radialement extérieure définit un appui radial pour la bande de roulement du pneumatique lorsque celui-ci est dégonflé, ledit anneau rigide étant monté sur et autour d'au moins une pièce annulaire en matériau élastique souple, elle-même disposée sur la jante en position de montage, caractérisé en ce que les moyens de liaison entre lesdits secteurs forment une charnière à axe parallèle à l'axe de la jante.

2. Dispositif selon la revendication 1, caractérisé en ce qu'il comporte une pièce annulaire dont la largeur L à l'état libre de toute contrainte est supérieure à la largeur l de ladite pièce annulaire en position de montage.

3. Dispositif selon la revendication 2, caractérisé en ce que la largeur L est comprise entre 101 % et 125 % de la largeur l.

4. Dispositif selon la revendication 1, caractérisé en ce que ladite charnière est constituée par des protubérances liées les unes à un secteur, les autres au secteur adjacent, lesdites protubérances étant agencées de façon à ce qu'elles pénètrent les unes entre les autres, chaque protubérance étant percée d'un trou permettant l'insertion d'un axe de liaison lorsque les secteurs sont en position de montage.

5. Dispositif selon la revendication 4, caractérisé en ce que chaque secteur comporte deux protubérances à l'une de ses extrémités et trois protubérances à l'autre de ses extrémités.

6. Dispositif selon la revendication 4 ou 5, caractérisé en ce que l'axe de liaison comporte un épaulement en saillie à

. . .

0233547

l'une de ses extrémités.

7. Dispositif selon la revendication 6, caractérisé en ce que l'axe de liaison comporte, à l'autre de ses extrémités, un évidement permettant d'introduire un élément de blocage choisi parmi le groupe constitué par les goupilles et les rondelles élastiques fendues.

8. Dispositif selon l'une des revendications 2 à 7, caractérisé en ce qu'il est prévu de moyens de centrage axial dudit anneau rigide sur ladite pièce annulaire en matériau élastique.

9. Dispositif selon la revendication 8, caractérisé en ce que lesdits moyens de centrage sont constitués par deux nervures réalisées sur ladite pièce annulaire en matériau élastique, entre lesquelles on dispose ledit anneau rigide.

10. Dispositif selon la revendication 1, caractérisé en ce qu'il comporte transversalement, deux pièces annulaires en matériau élastique souple disposées de part et d'autre de l'anneau rigide, chacune prenant appui axialement vers l'intérieur sur une face solidaire de l'anneau rigide, et axialement vers l'extérieur contre le bourrelet du pneumatique, et étant dimensionnée de manière telle que, en position de montage, lesdites pièces annulaires soient en compression axialement.

11. Dispositif selon l'une des revendications 1 à 10, caractérisé en ce que la(les)dite(s) pièce(s) annulaire(s) en matériau élastique souple est(sont) fendue(s) transversalement.

FIG.1

41    4    3

4020   402   4021   51

51         2

10

5         1

FIG.5

41

3

402         51'

5

FIG.2

4020

402

41

400B

401

400A    401

41

FIG.3

41

41

402    400

FIG.4

402

41

FIG.6

# RAPPORT DE RECHERCHE EUROPEENNE

Office européen des brevets

Numéro de la demande **0233547**

EP 87 10 1499

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | FR-A-1 560 299 (MASCHINENFABRIK AUGSBURG-NÜRNBERG)<br>* Page 4, lignes 8-37; figures 1-4,9 * | 1,4,6 | B 60 C 17/04<br>B 60 B 21/12 |
| Y | US-A-4 346 747 (OSADA)<br>* Colonne 2, ligne 26 - colonne 3, ligne 11; figures 1-46 * | 1,4 | |
| A | | 5 | |
| Y | FR-A-2 393 689 (MICHELIN)<br>* Page 2, ligne 35 - page 3, ligne 16; figures 1-3 * | 1,4 | |
| A | FR-A- 787 707 (MICHELIN)<br>* Page 3, colonne de gauche, lignes 6-14; figure 3 * | 1 | **DOMAINES TECHNIQUES RECHERCHES (Int Cl 4)**<br><br>B 60 B<br>B 60 C |
| A | GB-A-1 556 721 (PATECELL)<br>* Page 3, ligne 102 - page 4, ligne 2; figures 9,10 * | 1 | |
| A | FR-A-2 160 265 (PATECELL)<br>* Page 8, lignes 1-32; figures 1-5 * | 1 | |
| | --- -/- | | |

Le présent rapport de recherche a été établi pour toutes les revendications

| Lieu de la recherche | Date d'achèvement de la recherche | Examinateur |
|---|---|---|
| LA HAYE | 18-05-1987 | AYITER I. |

Office européen
des brevets

**RAPPORT DE RECHERCHE EUROPEENNE**

Numéro de la demande

**0233547**

EP  87 10 1499

| | DOCUMENTS CONSIDERES COMME PERTINENTS | | Page  2 |
|---|---|---|---|

| Catégorie | Citation du document avec indication, en cas de besoin, des parties pertinentes | Revendication concernee | CLASSEMENT DE LA DEMANDE (Int. Cl.4) |
|---|---|---|---|
| A | US-A-4 173 243  (WILDE)<br>* Colonne 2, lignes 3-26; figures 1-4 *<br><br>----- | 1 | |
| | | | **DOMAINES TECHNIQUES RECHERCHES (Int Cl 4)** |

Le présent rapport de recherche a été établi pour toutes les revendications

| Lieu de la recherche | Date d'achèvement de la recherche | Examinateur |
|---|---|---|
| LA HAYE | 18-05-1987 | AYITER I.- |